# EUROPÄISCHE PATENTANMELDUNG

(11) **EP 4 328 620 A1**
(43) Veröffentlichungstag der Anmeldung: **28.02.2024**
(21) Anmeldenummer: 23190163.8
(22) Anmeldetag: 08.08.2023
(51) Int. Cl.: G01S 7/481, G01S 17/04, G01S 17/50

(54) **SENSORVORRICHTUNG ZUR DETEKTION EINER BEWEGUNG UND ANORDNUNG ZUR MESSUNG EINER ZEITDIFFERENZ**

(30) Priorität: 26.08.2022 DE 102022121679
(71) Anmelder: Einhell Germany AG, 94405 Landau / Isar (DE)
(72) Erfinder: MAYR, Stefan, 94405 Landau/Isar (DE)
(74) Vertreter: Hofstetter, Schurack & Partner

(57) **Zusammenfassung**

Eine Sensorvorrichtung (1, 1') zur Detektion einer Bewegung eines Objekts in einer Umgebung der Sensorvorrichtung (1, 1') weist ein Sensormodul (2, 2') mit einer Lichtquelle (4, 4') auf, die dazu eingerichtet ist, Licht in die Umgebung der Sensorvorrichtung (1, 1') zu emittieren, und einen optischen Detektor (5, 5'), der dazu eingerichtet ist, von dem Objekt reflektierte Anteile des Lichts zu empfangen und abhängig davon ein Detektorsignal zu erzeugen. Die Sensorvorrichtung (1, 1') weist ein Akkupack (3, 3') mit wenigstens einer Akkumulatorzelle (6, 6') und einer Funkschnittstelle (8, 8') auf, wobei das Sensormodul (2, 2') zur Versorgung der Lichtquelle (4, 4') elektrisch mit dem Akkupack (3, 3') verbindbar ist, sowie einen Steuerschaltkreis (7, 7'), der dazu eingerichtet ist, abhängig von dem Detektorsignal eine Information betreffend die Bewegung des Objekts in der Umgebung der Sensorvorrichtung (1, 1') über die Funkschnittstelle (8, 8') auszusenden.

## Beschreibung

Die vorliegende Erfindung betrifft eine Sensorvorrichtung zur Detektion einer Bewegung eines Objekts in einer Umgebung der Sensorvorrichtung sowie eine Anordnung zur Messung einer Zeitdifferenz aufweisend eine solche Sensorvorrichtung.

Es ist bekannt, aktive optische Sensorsysteme, die eine Lichtquelle zum Aussenden von Licht, beispielsweise Infrarotlicht, und einen optischen Detektor zum Empfangen reflektierter Anteile des emittierten Lichts aufweisen, zur Bewegungsdetektion zu verwenden. Entsprechende Vorrichtungen können beispielsweise als Lichtschranken fest installiert und über eine entsprechende Verkabelung mit einem elektrischen Stromnetz zur Energieversorgung verbunden sein. Wird eine Bewegung detektiert, so kann etwa eine Beleuchtung aktiviert werden oder dergleichen.

Es ist eine Aufgabe der vorliegenden Erfindung, eine Sensorvorrichtung zur Detektion einer Bewegung eines Objekts anzugeben, die ortsungebunden eingesetzt werden kann.

Diese Aufgabe wird durch den Gegenstand des unabhängigen Anspruchs gelöst. Vorteilhafte Weiterbildungen sind Gegenstand der abhängigen Ansprüche.

Die Erfindung beruht auf dem Gedanken, ein Sensormodul mit einer Lichtquelle und einem optischen Detektor vorzusehen sowie ein Akkupack, das zur Versorgung wenigstens der Lichtquelle mit elektrischer Energie durch eine Akkumulatorzelle des Akkupacks mit dem Sensormodul verbindbar ist. Ferner wird eine Funkschnittstelle des Akkupacks genutzt, um Informationen betreffend die detektierte Bewegung des Objekts übermitteln zu können, beispielsweise an eine externe Recheneinheit.

Gemäß einem Aspekt der Erfindung wird eine Sensorvorrichtung zur Detektion einer Bewegung eines Objekts in einer Umgebung der Sensorvorrichtung angegeben. Die Sensorvorrichtung weist ein Sensormodul auf und ein Akkupack. Das Sensormodul beinhaltet eine Lichtquelle, die derart angeordnet und dazu eingerichtet ist, Licht in die Umgebung der Sensorvorrichtung zu emittieren. Das Sensormodul weist außerdem einen optischen Detektor auf, der derart angeordnet und dazu eingerichtet ist, von dem Objekt reflektierte Anteile des emittierten Lichts zu empfangen und abhängig von den empfangenen Anteilen des emittierten Lichts ein Detektorsignal zu erzeugen. Der Akkupack weist wenigstens eine Akkumulatorzelle auf sowie eine Funkschnittstelle. Das Sensormodul ist zur Versorgung der Lichtquelle mit elektrischer Energie durch die wenigstens eine Akkumulatorzelle elektrisch mit dem Akkupack verbindbar oder verbunden. Die Sensorvorrichtung beinhaltet einen Steuerschaltkreis, der dazu eingerichtet ist, abhängig von dem Detektorsignal eine Information betreffend die Bewegung des Objekts in der Umgebung der Sensorvorrichtung über die Funkschnittstelle auszusenden, insbesondere in die Umgebung der Sensorvorrichtung als Funksignal auszusenden.

Hier und im Folgenden kann der Begriff "Licht" derart verstanden werden, dass davon elektromagnetische Wellen im sichtbaren Bereich, im infraroten Bereich und/oder im ultravioletten Bereich umfasst sind. Dementsprechend kann auch der Begriff "optisch" derart verstanden werden, dass er sich auf Licht nach diesem Verständnis bezieht.

Die Lichtquelle kann beispielsweise eine oder mehrere lichtemittierende Dioden, LEDs, insbesondere infrarotes Licht emittierende LEDs, oder eine oder mehrere Laserdioden, insbesondere infrarotes Licht emittierende Laserdioden, beinhalten. Der optische Detektor kann beispielsweise eine oder mehrere Fotodioden beinhalten, die bezüglich des emittierten Lichts empfindlich sind.

Je nach Ausgestaltung kann auch der optische Detektor bei elektrischer Verbindung des Sensormoduls mit dem Akkupack durch die wenigstens eine Akkumulatorzelle mit elektrischer Energie versorgbar sein.

Abgesehen davon können weitere Komponenten der Sensorvorrichtung, insbesondere der Steuerschaltkreis und/oder die Funkschnittstelle, mittels der wenigstens einen Akkumulatorzelle mit elektrischer Energie versorgbar sein.

Der Steuerschaltkreis kann Teil des Akkupacks oder des Sensormoduls sein. Es ist auch möglich, dass ein Teil des Steuerschaltkreises in dem Sensormodul vorgesehen ist und ein weiterer Teil des Steuerschaltkreises in dem Akkupack. Ist der Steuerschaltkreis Teil des Sensormoduls, so ist er durch die Verbindung des Sensormoduls mit dem Akkupack mit der Funkschnittstelle verbindbar beziehungsweise verbunden. Beinhaltet das Sensormodul den Teil des Steuerschaltkreises und der Akkupack den weiteren Teil des Steuerschaltkreises, so sind die beiden Teile durch die Verbindung des Sensormoduls mit dem Akkupack miteinander verbindbar beziehungsweise verbunden. Der weitere Teil des Steuerschaltkreises ist mit der Funkschnittstelle verbunden.

Beispielsweise kann der Steuerschaltkreis die Lichtquelle zum Emittieren des Lichts ansteuern. Alternativ kann hierfür ein Lichtquellentreiber in dem Sensormodul oder in dem Akkupack vorgesehen sein.

Der Steuerschaltkreis kann eine oder mehrere Recheneinheiten beinhalten. Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Das Sensormodul und der Akkupack sind auch mechanisch miteinander verbindbar beziehungsweise verbunden. Die Verbindung ist dabei insbesondere zerstörungsfrei lösbar, es handelt sich insbesondere um eine kraftschlüssige und/oder formschlüssige Verbindung.

Ein Akkupackgehäuse des Akkupacks kann lösbar, insbesondere zerstörungsfrei lösbar, mit einem Sensorgehäuse des Sensormoduls verbunden werden, beispielsweise über eine Rastverbindung, eine Steckverbindung und/oder eine Klemmverbindung. Insbesondere kann die mechanische Verbindung des Akkupackgehäuses mit dem Sensorgehäuse als formschlüssige und/oder kraftschlüssige Verbindung ausgestaltet sein, ohne dass eine stoffschlüssige Verbindung vorliegt. Mit anderen Worten kann die mechanische Verbindung des Akkupackgehäuses mit dem Sensorgehäuse gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist der Akkupack als Wechselakkupack, insbesondere Systemakkupack, ausgestaltet. Zur elektrischen und mechanischen Verbindung können das Akkupackgehäuses und das Sensorgehäuse jeweilige Schnittstellen aufweisen.

Die elektrische Verbindung es Akkupacks mit dem Sensormodul kann beispielsweise über einen oder mehrere lösbare elektrische Kontakte, beispielsweise Klemmkontakte oder Steckkontakte, insbesondere sogenannte Tulpenkontakte oder Schwertkontakte, erfolgen. Beispielsweise können an den Schnittstellen der Gehäuse jeweils zueinander kompatible Stecker oder Buchsen beziehungsweise Aufnahmen oder dergleichen vorgesehen sein, um die elektrische Verbindung des Akkupacks mit dem Sensormodul zu erzielen.

Beispielsweise sind das Sensormodul und der Akkupack derart ausgestaltet, dass die mechanische Verbindung automatisch beziehungsweise zwingend zu der elektrischen Verbindung führt, indem durch die mechanische Verbindung die entsprechenden elektrischen Kontakte des Sensormoduls beziehungsweise des Akkupacks in Kontakt miteinander gebracht werden.

Die Information betreffend die Bewegung des Objekts kann beispielsweise die Information beinhalten, dass die Bewegung des Objekts anhand des Detektorsignals detektiert wurde. In diesem Fall ist der Steuerschaltkreis dazu eingerichtet, basierend auf dem Detektorsignal die Bewegung zu detektieren und die Information betreffend die Bewegung zu erzeugen. Die Information betreffend die Bewegung kann auch einer Information entsprechen, basierend auf der festgestellt werden kann, ob die Bewegung des Objekts erfolgte oder nicht. Insbesondere kann die Information also das Detektorsignal beziehungsweise Informationen oder Parameter des Detektorsignals beinhalten. In diesem Fall kann beispielsweise eine externe Recheneinheit, also eine Recheneinheit, die nicht Teil der Sensorvorrichtung ist, beispielsweise eine Serverrecheneinheit oder eine Cloud-Recheneinheit, die Informationen erhalten und basierend darauf die Bewegung des Objekts detektieren.

Das Aussenden der Information betreffend die Bewegung des Objekts beinhaltet insbesondere das Aussenden eines Funksignals, welches die Information betreffend die Bewegung des Objekts beinhaltet oder codiert.

Durch die erfindungsgemäße Sensorvorrichtung wird eine autarke Energieversorgung des Sensormoduls und der sonstigen Komponenten der Sensorvorrichtung, welche mit elektrischer Energie zu versorgen sind, gewährleistet. Dadurch ist eine drahtgebundene Energieversorgung der Sensorvorrichtung nicht erforderlich. Darüber hinaus kann auch die Information betreffend die Bewegung des Objekts weitgehend ortsunabhängig bereitgestellt werden, so dass insgesamt ein ortsungebundener Einsatz der Sensorvorrichtung ermöglicht wird.

Die erfindungsgemäße Ausgestaltung der Sensorvorrichtung durch das Sensormodul und den davon trennbaren beziehungsweise lösbaren Akkupack hat zudem den Vorteil, dass der Akkupack auch zur Energieversorgung anderer Elektrogeräte eingesetzt werden kann, wenn die Sensorvorrichtung nicht im Betrieb ist. Dementsprechend können Material und sonstige Ressourcen zur Herstellung des Akkupacks eingespart werden, da mehrere Anwendungen mit ein und demselben Akkupack realisiert werden können.

Gemäß zumindest einer Ausführungsform der Sensorvorrichtung beinhaltet das Sensormodul den Steuerschaltkreis und der Steuerschaltkreis ist durch die wenigstens eine Akkumulatorzelle mit elektrischer Energie versorgbar beziehungsweise wird durch die wenigstens eine Akkumulatorzelle mit elektrischer Energie versorgt, wenn das Sensormodul mit dem Akkupack verbunden ist.

Alternativ enthält das Akkupack den Steuerschaltkreis und der Steuerschaltkreis ist zur Versorgung des Steuerschaltkreises mit elektrischer Energie mit der wenigstens einen Akkumulatorzelle verbunden.

Gemäß zumindest einer Ausführungsform ist der Steuerschaltkreis dazu eingerichtet, die Bewegung des Objekts zu detektieren und abhängig von der Detektion der Bewegung die Information über die Funkschnittstelle auszusenden.

Dadurch ist es mit Vorteil nicht erforderlich, dass der Empfänger des Funksignals beziehungsweise der Information, beispielsweise die externe Recheneinheit, eine entsprechende Funktionalität vorhält.

Der Steuerschaltkreis ist insbesondere dazu eingerichtet, die Bewegung des Objekts basierend auf dem Detektorsignal zu detektieren. Beispielsweise kann der Steuerschaltkreis die Bewegung des Objekts basierend auf einer zeitlichen Veränderung einer Amplitude des Detektorsignals detektieren. Das Detektorsignal stellt ein Maß für die Intensität der detektierten reflektierenden Anteile des emittierten Lichts dar. Dementsprechend kann der Steuerschaltkreis abhängig von dem Detektorsignal erkennen, ob die Intensität der reflektierten Anteile ansteigt oder absinkt. Ein Ansteigen der Intensität kann beispielsweise derart interpretiert werden, dass sich das Objekt in den Erfassungsbereich der Sensorvorrichtung bewegt hat, wohingegen ein Absinken der Intensität derart interpretiert werden kann, dass sich das Objekt aus dem Erfassungsbereich der Sensorvorrichtung bewegt hat. Bleibt die Intensität konstant, so kann dies beispielsweise derart interpretiert werden, dass keine Bewegung des Objekts stattgefunden hat. Es versteht sich, dass entsprechende Toleranzbereiche und/oder Schwellwerte für das Detektorsignal beziehungsweise die Intensität der reflektierten Anteile vorgesehen werden können, um die Bewegung zuverlässig zu detektieren.

In alternativen Ausführungsformen empfängt die externe Recheneinheit die Informationen beziehungsweise das Funksignal und detektiert basierend darauf die Bewegung. Die externe Recheneinheit und die Sensorvorrichtung stellen dann eine erfindungsgemäße Anordnung zur Bewegungsdetektion dar.

Gemäß zumindest einer Ausführungsform weist der Akkupack ein Akkupackgehäuse mit einer mechanischen Schnittstelle auf. Das Sensormodul weist ein Sensorgehäuse mit einer weiteren mechanischen Schnittstelle auf. Die mechanische Schnittstelle und die weitere mechanische Schnittstelle sind derart aneinander angepasst, dass zur Verbindung des Akkupacks mit dem Sensormodul das Akkupackgehäuse an dem Sensorgehäuse mittels einer Steck- und/oder Rastverbindung befestigbar ist.

Insbesondere wird durch Herstellen der Steck- und/oder Rastverbindung die elektrische Verbindung zur Versorgung der Lichtquelle und gegebenenfalls weiterer Komponenten des Sensormoduls mit elektrischer Energie durch die wenigstens eine Akkumulatorzelle hergestellt.

Gemäß einem weiteren Aspekt der Erfindung wird eine Anordnung zur Messung einer Zeitdifferenz angegeben. Die Anordnung weist eine erfindungsgemäße Sensorvorrichtung auf, sowie eine weitere Sensorvorrichtung. Die weitere Sensorvorrichtung ist ebenfalls gemäß der Erfindung ausgestaltet.

Dementsprechend weist die weitere Sensorvorrichtung ein weiteres Sensormodul auf mit einer weiteren Lichtquelle, die angeordnet und eingerichtet ist, Licht in eine Umgebung der weiteren Sensorvorrichtung zu emittieren, sowie einen weiteren optischen Detektor, der angeordnet und dazu eingerichtet ist, von dem Objekt reflektierte Anteile des von der weiteren Lichtquelle emittierten Lichts zu empfangen und abhängig davon ein weiteres Detektorsignal zu erzeugen. Die weitere Sensorvorrichtung weist ein weiteres Akkupack mit wenigstens einer weiteren Akkumulatorzelle und einer weiteren Funkschnittstelle auf, wobei das weitere Sensormodul zur Versorgung der weiteren Lichtquelle mit elektrischer Energie durch die wenigstens eine weitere Akkumulatorzelle elektrisch mit dem weiteren Akkupack verbindbar ist. Die weitere Sensorvorrichtung weist einen weiteren Steuerschaltkreis auf, der dazu eingerichtet ist, abhängig von dem weiteren Detektorsignal eine weitere Information betreffend eine weitere Bewegung des Objekts in der Umgebung der weiteren Sensorvorrichtung oder eines weiteren Objekts in der Umgebung der Sensorvorrichtung über die weitere Funkschnittstelle auszusenden.

Alle Ausführungen bezüglich der Sensorvorrichtung und ihrer einzelnen Bestandteile lassen sich analog auf die weitere Sensorvorrichtung und die entsprechenden Bestandteile derselben übertragen.

Gemäß zumindest einer Ausführungsform der Anordnung zur Messung der Zeitdifferenz weist die Anordnung eine Recheneinheit auf, die dazu eingerichtet ist, die ausgesendete Information und die ausgesendete weitere Information zu erhalten, also insbesondere ein entsprechendes Funksignal und ein entsprechendes weiteres Funksignal von der Funkschnittstelle beziehungsweise der weiteren Funkschnittstelle zu erhalten, und abhängig davon die Zeitdifferenz zwischen der Bewegung und der weiteren Bewegung zu bestimmen.

Die Recheneinheit ist eine externe Recheneinheit, ist also separat von der Sensorvorrichtung und der weiteren Sensorvorrichtung angeordnet. Die Recheneinheit kann beispielsweise einer Serverrecheneinheit oder einer Cloud-Recheneinheit entsprechen. Die Recheneinheit kann auch ein Notebook-Computer oder ein mobiles elektronisches Endgerät, wie etwa ein Smartphone oder ein Tablet-Computer sein.

Die Recheneinheit erhält die Information beziehungsweise die weitere Information nicht notwendigerweise direkt, sondern kann die Information auch indirekt über ein Funknetzwerk, beispielsweise ein Mobilfunknetzwerk, ein WLAN-Netzwerk oder ein WPAN-Netzwerk und entsprechende Netzwerkknoten oder Netzwerkteilnehmer erhalten.

Gemäß zumindest einer Ausführungsform der Anordnung ist der weitere Steuerschaltkreis dazu eingerichtet, die weitere Bewegung des Objekts oder des weiteren Objekts zu detektieren, insbesondere abhängig von dem weiteren Detektorsignal, und abhängig von der Detektion der weiteren Bewegung die weitere Information über die weitere Funkschnittstelle auszusenden.

In alternativen Ausführungsformen detektiert die Recheneinheit die Bewegung des Objekts oder des weiteren Objekts abhängig von den empfangenen weiteren Informationen.

Gemäß zumindest einer Ausführungsform enthält die Information eine Zeitinformation betreffend einen Zeitpunkt der Bewegung und die weitere Information enthält eine weitere Zeitinformation betreffend einen weiteren Zeitpunkt der weiteren Bewegung. Die Recheneinheit ist dazu eingerichtet, die Zeitdifferenz basierend auf der Zeitinformation und der weiteren Zeitinformation zu bestimmen.

Dabei bestimmt insbesondere der Steuerschaltkreis den Zeitpunkt basierend auf dem Detektorsignal und der weitere Steuerschaltkreis bestimmt den weiteren Zeitpunkt basierend auf dem weiteren Detektorsignal.

Gemäß zumindest einer Ausführungsform weist der Steuerschaltkreis eine Systemuhr (Englisch: "system clock") auf, die dazu eingerichtet ist, ein Systemzeitsignal zu erzeugen und der Steuerschaltkreis ist dazu eingerichtet, die Zeitinformation basierend auf dem Systemzeitsignal zu bestimmen. Der weitere Steuerschaltkreis weist eine mit der Systemuhr synchronisierte weitere Systemuhr auf, die dazu eingerichtet ist, ein weiteres Systemzeitsignal zu erzeugen. Der weitere Steuerschaltkreis ist dazu eingerichtet, die weitere Zeitinformation basierend auf dem weiteren Systemzeitsignal zu bestimmen.

Gemäß zumindest einer Ausführungsform sind der erste und der zweite Steuerschaltkreis dazu eingerichtet, über die Funkschnittstelle und die weitere Funkschnittstelle wenigstens ein Synchronisierungssignal auszutauschen, um die Systemuhr mit der weiteren Systemuhr zu synchronisieren.

Alternativ ist die Recheneinheit dazu eingerichtet, jeweils eine Synchronisierungsinformation an den Steuerschaltkreis und den weiteren Steuerschaltkreis zu übermitteln, insbesondere über die Funkschnittstelle beziehungsweise die weitere Funkschnittstelle. Der Steuerschaltkreis und der weitere Steuerschaltkreis sind dazu eingerichtet, die Systemuhr und die weitere Systemuhr abhängig von der jeweils übermittelten Synchronisierungsinformation zu synchronisieren.

Ist im Rahmen der vorliegenden Offenbarung die Rede davon, dass eine Komponente der erfindungsgemäßen Sensorvorrichtung, insbesondere der Steuerschaltkreis, oder der erfindungsgemäßen Anordnung zur Messung einer Zeitdifferenz, beispielsweise deren Recheneinheit, dazu eingerichtet, ausgebildet, ausgelegt, oder dergleichen ist, eine bestimmte Funktion auszuführen oder zu realisieren, eine bestimmte Wirkung zu erzielen oder einem bestimmten Zweck zu dienen, so kann dies derart verstanden werden, dass die Komponente, über die prinzipielle oder theoretische Verwendbarkeit oder Eignung der Komponente für diese Funktion, Wirkung oder diesen Zweck hinaus, durch eine entsprechende Anpassung, Programmierung, physische Ausgestaltung und so weiter konkret und tatsächlich dazu in der Lage ist, die Funktion auszuführen oder zu realisieren, die Wirkung zu erzielen oder dem Zweck zu dienen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- Fig. 1: eine schematische Darstellung einer beispielhaften Ausführungsform einer Sensorvorrichtung gemäß der Erfindung; und
- Fig. 2: eine schematische Darstellung einer beispielhaften Ausführungsform einer Anordnung zur Messung einer Zeitdifferenz gemäß der Erfindung.

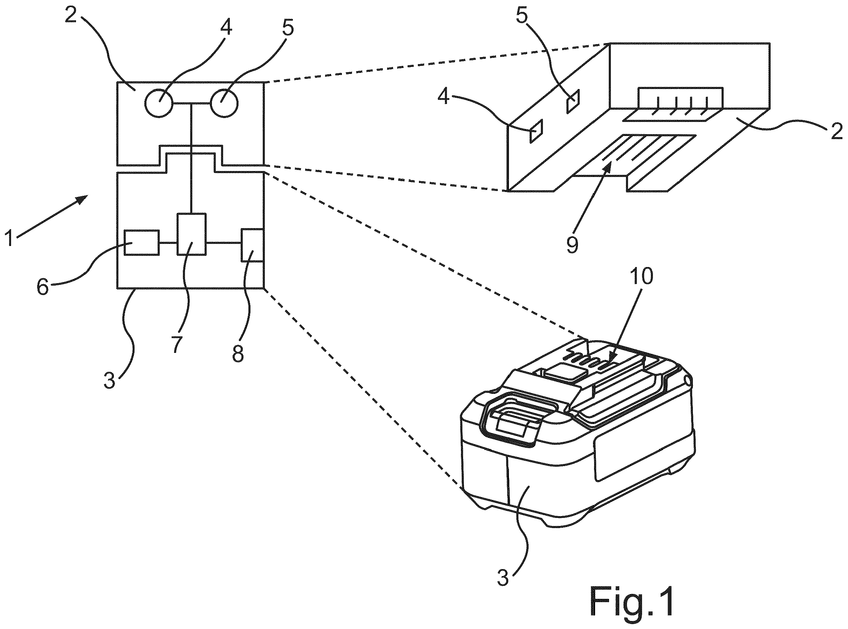

In Fig. 1 ist schematisch eine beispielhafte Ausführungsform einer erfindungsgemäßen Sensorvorrichtung 1 zur Detektion einer Bewegung eines Objekts in einer Umgebung der Sensorvorrichtung 1 dargestellt.

Die Sensorvorrichtung 1 weist ein Sensormodul 2 mit einer Lichtquelle 4, beispielsweise einer Infrarot-LED oder einer Infrarot-Laserdiode, auf die angeordnet und dazu eingerichtet ist, Licht in die Umgebung der Sensorvorrichtung 1 zu emittieren. Das Sensormodul 2 weist ferner einen optischen Detektor 5 auf, der angeordnet und dazu eingerichtet ist, von dem Objekt reflektierte Anteile des emittierten Lichts zu empfangen und abhängig davon ein Detektorsignal zu erzeugen. Die Sensorvorrichtung 1 weist auch einen Akkupack 3 mit wenigstens einer Akkumulatorzelle 6 und einer Funkschnittstelle 8 auf.

Das Sensormodul 2 ist mechanisch und elektrisch mit dem Akkupack 3 verbunden, sodass die Lichtquelle 4 durch die wenigstens eine Akkumulatorzelle 6 mit elektrischer Energie versorgt wird.

Die Sensorvorrichtung 1, beispielsweise das Akkupack 3, weist außerdem einen Steuerschaltkreis 7 auf, der dazu eingerichtet ist, abhängig von dem Detektorsignal eine Information betreffend die Bewegung des Objekts in der Umgebung der Sensorvorrichtung 1 über die Funkschnittstelle 8 auszusenden. Insbesondere kann der Steuerschaltkreis 7 die Bewegung des Objekts basierend auf dem Detektorsignal detektieren und abhängig von der Detektion der Bewegung die Information über die Funkschnittstelle 8 auszusenden, dass die Bewegung detektiert wurde und beispielsweise zu welchem Zeitpunkt. Hierzu kann der Steuerschaltkreis 7 eine Systemuhr aufweisen.

Um das Sensormodul 2 mechanisch und elektrisch mit dem Akkupack 3 zu verbinden, ist an einem Akkupackgehäuse des Akkupacks 3 eine Schnittstelle 10 vorgesehen. Ein Sensorgehäuse des Sensormoduls 2 weist eine weitere Schnittstelle 9 auf, welche mit der Schnittstelle 10 des Akkupacks 3 kompatibel ist. Insbesondere kann das Akkupackgehäuse beispielsweise in eine entsprechende Aufnahme des Sensorgehäuses eingeschoben werden und rastet dann bei ordnungsgemäßer Anbringung ein, so dass eine mechanische Kopplung und eine elektrische Kopplung des Sensormoduls 2 mit dem Akkupack 3 erfolgt. Wird die Sensorvorrichtung 1 nicht verwendet, so kann durch Lösen einer Rastverbindung oder dergleichen das Akkupackgehäuse zerstörungsfrei von dem Sensorgehäuse entfernt werden und der Akkupack 3 beispielsweise zur Energieversorgung sonstiger Elektrogeräte oder Elektrowerkzeuge verwendet werden. Es handelt sich bei dem Akkupack 3 also insbesondere um ein Wechselakkupack oder Systemakkupack, das kompatibel zu mehreren Elektrogeräten ist und wahlweise mit diesen eingesetzt werden kann.

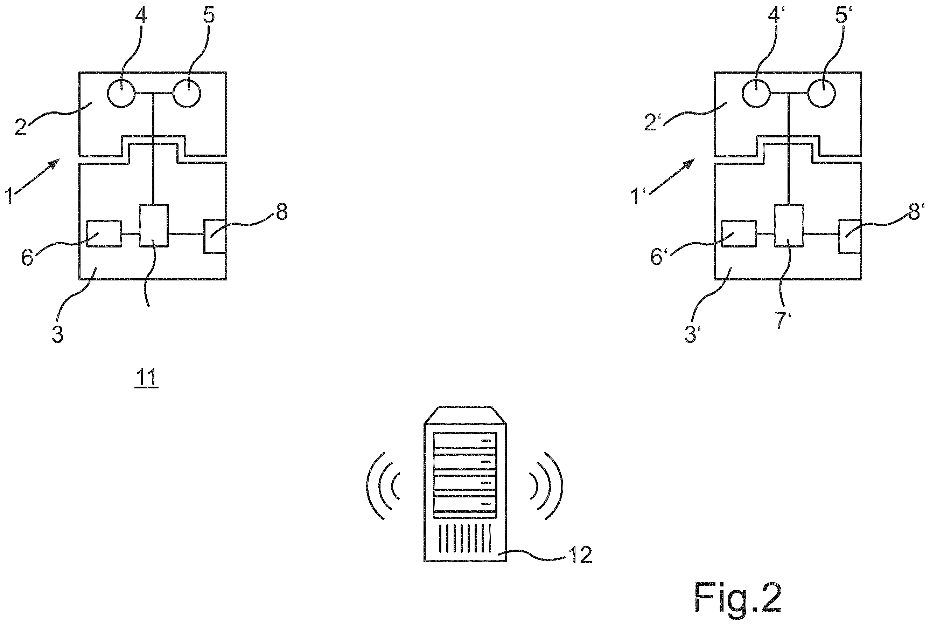

In Fig. 2 ist schematisch eine beispielhafte Ausführungsform einer erfindungsgemäßen Anordnung 11 zur Messung einer Zeitdifferenz dargestellt, die eine erfindungsgemäße Sensorvorrichtung 1 aufweist, wie sie beispielsweise mit Bezug auf Fig. 1 beschrieben wurde.

Die Anordnung 11 weist eine weitere erfindungsgemäße Sensorvorrichtung 1' auf mit einem weiteren Sensormodul 2', welches eine weitere Lichtquelle 4' enthält, die angeordnet und dazu eingerichtet ist, Licht in eine Umgebung der weiteren Sensorvorrichtung 1' zu emittieren. Ein weiterer optischer Detektor 5' ist angeordnet und dazu eingerichtet, von dem Objekt reflektierte Anteile des von der weiteren Lichtquelle 4' emittierten Lichts zu empfangen und abhängig davon ein weiteres Detektorsignal zu erzeugen.

Die weitere Sensorvorrichtung 1' weist einen weiteren Akkupack 3' mit wenigstens einer weiteren Akkumulatorzelle 6' und einer weiteren Funkschnittstelle 8' auf, wobei das weitere Sensormodul 2' zur Versorgung der weiteren Lichtquelle 4' mit elektrischer Energie durch die wenigstens eine weitere Akkumulatorzelle 6' elektrisch mit dem weiteren Akkupack 3' verbindbar ist.

Die weitere Sensorvorrichtung 1' weist einen weiteren Steuerschaltkreis 7' auf, der dazu eingerichtet ist, abhängig von dem weiteren Detektorsignal eine weitere Information betreffend eine weitere Bewegung des Objekts in der Umgebung der weiteren Sensorvorrichtung 1' über die weitere Funkschnittstelle 8' auszusenden.

Die obenstehenden Erläuterungen betreffend die Sensorvorrichtung 1 und deren Bestandteile lassen sich analog auf die weitere Sensorvorrichtung 1' und ihre Bestandteile übertragen.

Die Anordnung 11 weist beispielsweise eine Recheneinheit 12 auf, die die Information und die weitere Information direkt oder indirekt von der Funkschnittstelle 8 beziehungsweise der weiteren Funkschnittstelle 8 erhält. Die Recheneinheit 12 kann die Zeitdifferenz zwischen der Bewegung und der weiteren Bewegung abhängig von den empfangen Informationen und weiteren Informationen berechnen. Dabei beinhalten die Informationen insbesondere eine Zeitinformation betreffend einen Zeitpunkt der Bewegung und die weitere Information beinhaltet eine weitere Zeitinformation betreffend einen weiteren Zeitpunkt der weiteren Bewegung.

### BEZUGSZEICHENLISTE:

- 1, 1': Sensorvorrichtungen
- 2, 2': Sensormodule
- 3, 3': Akkupacks
- 4, 4': Lichtquellen
- 5, 5': optische Detektoren
- 6, 6': Akkumulatorzellen
- 7, 7': Steuerschaltkreise
- 8, 8': Funkschnittstellen
- 9, 10: Schnittstellen
- 11: Anordnung zur Messung einer Zeitdifferenz
- 12: Recheneinheit

## Patentansprüche

1. Sensorvorrichtung (1, 1') zur Detektion einer Bewegung eines Objekts in einer Umgebung der Sensorvorrichtung (1, 1'), aufweisend
- ein Sensormodul (2, 2') mit einer Lichtquelle (4, 4'), die angeordnet und dazu eingerichtet ist, Licht in die Umgebung der Sensorvorrichtung (1, 1') zu emittieren, und einem optischen Detektor (5, 5'), der angeordnet und dazu eingerichtet ist, von dem Objekt reflektierte Anteile des emittierten Lichts zu empfangen und abhängig davon ein Detektorsignal zu erzeugen;
- einen Akkupack (3, 3') mit wenigstens einer Akkumulatorzelle (6, 6') und einer Funkschnittstelle (8, 8'), wobei das Sensormodul (2, 2') zur Versorgung der Lichtquelle (4, 4') mit elektrischer Energie durch die wenigstens eine Akkumulatorzelle (6, 6') elektrisch mit dem Akkupack (3, 3') verbindbar ist;
- einen Steuerschaltkreis (7, 7'), der dazu eingerichtet ist, abhängig von dem Detektorsignal eine Information betreffend die Bewegung des Objekts in der Umgebung der Sensorvorrichtung (1, 1') über die Funkschnittstelle (8, 8') auszusenden.

2. Sensorvorrichtung (1, 1') nach Anspruch 1, wobei
- das Sensormodul (2, 2') den Steuerschaltkreis (7, 7') enthält und der Steuerschaltkreis (7, 7'), wenn das Sensormodul (2, 2') mit dem Akkupack (3, 3') verbunden ist, durch die wenigstens eine Akkumulatorzelle (6, 6') mit elektrischer Energie versorgbar ist; oder
- der Akkupack (3, 3') den Steuerschaltkreis (7, 7') enthält und der Steuerschaltkreis (7, 7') zur Versorgung mit elektrischer Energie mit der wenigstens einen Akkumulatorzelle (6, 6') verbunden ist.

3. Sensorvorrichtung (1, 1') nach einem der vorhergehenden Ansprüche, wobei der Steuerschaltkreis (7, 7') dazu eingerichtet ist, die Bewegung des Objekts abhängig von dem Detektorsignal zu detektieren und abhängig von der Detektion der Bewegung die Information über die Funkschnittstelle (8, 8') auszusenden.

4. Sensorvorrichtung (1, 1') nach einem der vorhergehenden Ansprüche, wobei die
- der Akkupack (3, 3') ein Akkupackgehäuse mit einer mechanischen (10) Schnittstelle aufweist;
- das Sensormodul (2, 2') ein Sensorgehäuse mit einer weiteren mechanischen Schnittstelle (9) aufweist;
- die mechanische Schnittstelle (10) und die weitere mechanische Schnittstelle (9) aneinander angepasst sind, sodass zur Verbindung des Akkupacks (3, 3') mit dem Sensormodul (2, 2') das Akkupackgehäuse an dem Sensorgehäuse mittels einer Steck- und/oder Rastverbindung befestigbar ist.

5. Anordnung (11) zur Messung einer Zeitdifferenz, aufweisend eine Sensorvorrichtung (1, 1') nach einem der vorhergehenden Ansprüche und eine weitere Sensorvorrichtung (1, 1'), die weitere Sensorvorrichtung (1, 1') aufweisend
- ein weiteres Sensormodul (2, 2') mit einer weiteren Lichtquelle (4, 4'), die angeordnet und dazu eingerichtet ist, Licht in eine Umgebung der weiteren Sensorvorrichtung (1, 1') zu emittieren, und einem weiteren optischen Detektor (5, 5'), der angeordnet und dazu eingerichtet ist, von dem Objekt oder einem weiteren Objekt in der Umgebung der weiteren Sensorvorrichtung (1, 1') reflektierte Anteile des von der weiteren Lichtquelle (4, 4') emittierten Lichts zu empfangen und abhängig davon ein weiteres Detektorsignal zu erzeugen;
- einen weiteren Akkupack (3, 3') mit wenigstens einer weiteren Akkumulatorzelle (6, 6') und einer weiteren Funkschnittstelle (8, 8'), wobei das weitere Sensormodul (2, 2') zur Versorgung der weiteren Lichtquelle (4, 4') mit elektrischer Energie durch die wenigstens eine weitere Akkumulatorzelle (6, 6') elektrisch mit dem weiteren Akkupack (3, 3') verbindbar ist;
- einen weiteren Steuerschaltkreis (7, 7'), der dazu eingerichtet ist, abhängig von dem weiteren Detektorsignal eine weitere Information betreffend eine weitere Bewegung des Objekts oder des weiteren Objekts über die weitere Funkschnittstelle (8, 8') auszusenden.

6. Anordnung (11) nach Anspruch 5, wobei der weitere Steuerschaltkreis (7, 7') dazu eingerichtet ist, die weitere Bewegung des Objekts oder des weiteren Objekts abhängig von dem weiteren Detektorsignal zu detektieren und abhängig von der Detektion der weiteren Bewegung die weitere Information über die weitere Funkschnittstelle (8, 8') auszusenden.

7. Anordnung (11) nach einem der Ansprüche 5 oder 6, aufweisend eine Recheneinheit (12), die dazu eingerichtet ist, die ausgesendete Information und die ausgesendete weitere Information zu erhalten und abhängig davon die Zeitdifferenz zwischen der Bewegung und der weiteren Bewegung zu bestimmen.

8. Anordnung (11) nach Anspruch 7, wobei die Information eine Zeitinformation betreffend einen Zeitpunkt der Bewegung beinhaltet und die weitere Information eine weitere Zeitinformation betreffend einen weiteren Zeitpunkt der weiteren Bewegung beinhaltet und die Recheneinheit (12) dazu eingerichtet ist, die Zeitdifferenz basierend auf der Zeitinformation und der weiteren Zeitinformation zu bestimmen.

9. Anordnung (11) nach einem der Ansprüche 7 oder 8, wobei
- der Steuerschaltkreis (7, 7') eine Systemuhr aufweist, die dazu eingerichtet ist, ein Systemzeitsignal zu erzeugen und der Steuerschaltkreis (7, 7') dazu eingerichtet ist, die Zeitinformation basierend auf dem Systemzeitsignal zu bestimmen; und
- der weitere Steuerschaltkreis (7, 7') eine mit der Systemuhr synchronisierte weitere Systemuhr aufweist, die dazu eingerichtet ist, ein weiteres Systemzeitsignal zu erzeugen und der weitere Steuerschaltkreis (7, 7') dazu eingerichtet ist, die weitere Zeitinformation basierend auf dem weiteren Systemzeitsignal zu bestimmen.

10. Anordnung (11) nach Anspruch 9, wobei
- der Steuerschaltkreis (7, 7') und der weitere Steuerschaltkreis (7, 7') dazu eingerichtet sind, über die Funkschnittstelle (8, 8') und die weitere Funkschnittstelle (8, 8') wenigstens ein Synchronisierungssignal auszutauschen, um die Systemuhr mit der weiteren Systemuhr zu synchronisieren; oder
- die Recheneinheit (12) dazu eingerichtet ist, jeweils eine Synchronisierungsinformation an den Steuerschaltkreis (7, 7') und den weiteren Steuerschaltkreis (7, 7') zu übermitteln und der Steuerschaltkreis (7, 7') und der weitere Steuerschaltkreis (7, 7') dazu eingerichtet sind, die Systemuhr und die weitere Systemuhr abhängig von der jeweils übermittelten Synchronisierungsinformation zu synchronisieren.
